# EUROPÄISCHE PATENTSCHRIFT

(11) **EP 4 180 285 B1**
(45) Veröffentlichungstag und Bekanntmachung des Hinweises auf die Patenterteilung: **17.12.2025**
(21) Anmeldenummer: 22203556.0
(22) Anmeldetag: 25.10.2022
(51) Int. Cl.: B60T 7/04

(54) **BREMSEINRICHTUNG**
BRAKING DEVICE
DISPOSITIF DE FREINAGE

(30) Priorität: 15.11.2021 DE 102021129704
(43) Veröffentlichungstag der Anmeldung: 17.05.2023
(73) Patentinhaber: STILL GmbH, 22113 Hamburg (DE)
(72) Erfinder: GOSCH, Joris, 22111 Hamburg (DE); BULLERMANN, Björn, 21279 Hollsenstedt (DE); KÖSTER, Benny, 22117 Hamburg (DE)
(74) Vertreter: Patentship Patentanwaltgesellschaft

(56) Entgegenhaltungen:
- EP-A1- 3 034 369
- EP-A1- 3 683 111
- EP-A2- 2 724 903
- DE-A1- 102018 111 451
- US-A1- 2001 022 254

## Beschreibung

Die Erfindung betrifft eine Bremseinrichtung einer mobilen Arbeitsmaschine mit mindestens zwei Bremskreisen einer Betriebsbremse, wobei der eine Bremskreis eine direkt betätigte Bremse und der andere Bremskreis eine indirekt betätigte Fremdkraftbremse umfasst, wobei die Bremskreise über eine gemeinsame elektronische Steuereinrichtung gekoppelt sind, wobei jeder Bremskreis mit einem, dem jeweiligen Bremskreis zugeordneten, Bremssignalgeber in Wirkverbindung steht, der dazu ausgebildet ist, Bremssignale zu erzeugen, mit denen der jeweilige Bremskreis angesteuert wird, und jeder Bremskreis über mindestens einen Bremsdrucksensor und/oder Bremskraftsensor zur Messung von Bremsdrücken beziehungsweise Bremskräften in dem jeweiligen Bremskreis verfügt, wobei die elektronische Steuereinrichtung mit den Bremssignalgebern sowie den Bremsdrucksensoren und/oder Bremskraftsensoren in Wirkverbindung steht und dazu ausgebildet ist, die Bremssignale der Bremssignalgeber sowie die Sensordaten der Bremsdrucksensoren und/oder Bremskraftsensoren auszuwerten und eine variable Bremskraftverteilung zwischen den Bremskreisen zu steuern.

Unter mobilen Arbeitsmaschinen sollen im Rahmen der vorliegenden Erfindung Flurförderzeuge, mobile Land- und Forstgeräte sowie mobile Baumaschinen verstanden werden. Zu den Flurförderzeugen gehören insbesondere Gabelstapler, Schlepper und Plattformfahrzeuge. Solche mobilen Arbeitsmaschinen verfügen in der Regel über eine Betriebs- und eine Feststellbremse.

Als Betriebsbremsen kommen in mobilen Arbeitsmaschinen in der Regel Trommel-, Scheiben- oder Lamellenbremsen zum Einsatz. Dabei finden zwei verschiedene Bremskonzepte Anwendung:
1. Direkt hydraulisch oder mechanisch betätigte Bremsen, die aus einem Bremskreis oder aus zwei Bremskreisen bestehen können. Beide Varianten können mit einem hydraulischen, elektrischen oder pneumatischen Bremskraftverstärker ausgerüstet sein.
2. Indirekt hydraulisch oder mechanisch betätigte Bremsen in Form eines Fremdkraftbremssystems, das auf alle Bremskreise gleichermaßen wirkt. Bei Fremdkraftbremssystemen dient die Bremspedalbetätigung hydraulisch oder mechanisch in einem Ventil als Steuergröße, um einen Speicherdruck eines hydraulischen Druckspeichers proportional zur Radbremse zu übertragen.

Direkt betätigte Systeme werden eher bei kleineren Fahrzeugmassen eingesetzt, indirekte betätigte Systeme bei höheren Fahrzeugmassen. In der Regel wird die Entscheidung auf Basis der Druck- und Volumenanforderung und unter Berücksichtigung der Leitungslängen des Bremssystems getroffen.

Beide Systeme sind jeweils mit spezifischen Nachteilen verbunden:
1. Nachteile von direkt betätigten Bremsen:
   - Durch die direkte Kopplung entsteht ein Zielkonflikt zwischen möglichst geringer Pedalkraft und möglichst kurzem Pedalweg. Dieser Zielkonflikt kann nur durch einen Bremskraftverstärker entschärft werden.
   - Zweikreissysteme sind schwer auszulegen, da hier oftmals unterschiedliche Volumina und Drücke in den jeweiligen Bremskreisen vorliegen.
   - Die Implementierung von Bremsassistenzsystemen (z.B. für eine Gefahrenbremsung) in den hydraulischen Bremskreis ist erschwert.
   - Bei Ausfall der Energieversorgung in Systemen mit Bremskraftverstärkern erschweren (je nach Verwendung und Dimensionierung von Energiespeichern) stark erhöhte Pedalkräfte das Abbremsen.
2. Nachteile von indirekt betätigten Bremsen:
   - Fällt die Energieversorgung aus, hängt die Anzahl der verbleibenden Bremsvorgänge von Dimensionierung und Füllstand des Energiespeichers, beispielsweise eines hydraulischen Druckspeichers, ab.
   - Ein Bremsen mit geleertem Energiespeicher, beispielsweise eines hydraulischen Druckspeichers, ist nicht möglich. Dies ist problematisch bei langen Rampenfahrten, bei Abschleppvorgängen oder beim Wegrollen eines abgestellten Fahrzeugs. Dadurch ergibt sich eine höhere Abhängigkeit von der Funktionsfähigkeit und Dosierbarkeit der Feststellbremse.
   - Bei leerem Energiespeicher, beispielsweise eines hydraulischen Druckspeichers, steht mit der Feststellbremse nur noch ein Bremssystem zur Verfügung.
   - Das Fahrzeug ist nicht fahrbereit, bevor der Energiespeicher, beispielsweise eines hydraulischen Druckspeichers, nicht geladen ist.
   - In einem Zweikreissystem ist je Bremskreis ein Energiespeicher, beispielsweise eines hydraulischen Druckspeichers, notwendig.
   - Zufriedenstellende Feinfühligkeit und Dosierbarkeit erfordern einen hohen Entwicklungsaufwand.
   - Fällt bei einem Einkreissystem die Fremdkraft (der Energiespeicher) aus, ist entweder kein Bremsen möglich (bei positiver Betätigung) oder es erfolgt eine nicht steuerbare Vollbremsung (bei negativer Betätigung, beispielsweise einer hydraulisch lösbaren Federspeicherbremse).

Aus der EP 2 724 903 A2 ist eine Bremsvorrichtung für Arbeitsmaschinen und ein Verfahren zum Betätigen der Bremsvorrichtung bekannt.

Die EP 3 034 369 A1 offenbart eine mobile Arbeitsmaschine mit einer Bremseinrichtung.

Aus der US 2001/022254 A1 ist ein hydraulisches Fahrzeugsbremssystem bekannt.

Die EP 3 683 111 A1 offenbart eine Bremsvorrichtung für eine Arbeitsmaschine.

In der DE 10 2018 111 451 A1 ist eine Bremseinrichtung einer mobilen Arbeitsmaschine beschrieben, bei der die geschilderten Nachteile dadurch reduziert werden sollen, dass zwei Bremskreise kombiniert werden, wobei der eine Bremskreis eine direkt betätigte Muskelkraftbremse und der andere Bremskreis eine indirekt betätigte Fremdkraftbremse umfasst.

Die Bremskreise solcher Zweikreisbremssysteme sollten möglichst getrennt voneinander aufgebaut beziehungsweise angesteuert werden. Ein Fehler in einem der beiden Bremskreise sollte keinen Ausfall beider Bremskreise verursachen. In der Regel werden beide Bremskreise eines Zweikreisbremssystems allerdings aus einer Signalquelle angesteuert. Die Bremskreise werden dabei entweder über einen Pedaldruck oder einen Pedalweg eines Bremspedals gesteuert.

Ein weiteres Problem bei Zweikreisbremssystemen besteht darin, dass die maximale Bremsverzögerung des Fahrzeugs zu dem jeweiligen Fahrzeuggewicht passen muss. Hohe Bremskräfte erzeugen in einem leichten Fahrzeug einen Traktionsverlust und zu niedrige Bremskräfte erzeugen in einem schweren Fahrzeug zu wenig Bremsverzögerung.

Bei Zweikreisbremssystemen nach dem Stand der Technik sind die einzelnen Bremskreise fest auf das Fahrzeuggewicht abgestimmt, um ein Überbremsen oder eine zu schwache Bremsleistung zu verhindern. Eine nachträgliche Anpassung an unterschiedliche Fahrzeuggewichte und Gewichtsverteilungen ist nicht möglich.

Der vorliegenden Erfindung liegt die Aufgabe zugrunde, eine Bremseinrichtung zur Verfügung zu stellen, die eine hohe Zuverlässigkeit aufweist und eine Anpassung an veränderliche Fahrzeugbedingungen ohne bauliche Veränderungen ermöglicht.

Diese Aufgabe wird erfindungsgemäß dadurch gelöst, dass die Steuereinrichtung dazu ausgebildet ist, einen Ausfall eines der Bremssignalgeber durch einen Abgleich der Bremssignale der Bremssignalgeber und der gemessenen Bremsdrücke und/oder Bremskräfte zu erkennen und eine Fehlermeldung auszugeben.

Die Bremskreise sind über eine gemeinsame elektronische Steuereinrichtung gekoppelt. Die elektronische Kopplung der Bremskreise ermöglicht eine variable Abstimmung der Bremskreise und eine verbesserte Sicherheit beim Auftreten eines Fehlers in einem Bremskreis.

Gemäß der Erfindung ist vorgesehen, dass jeder Bremskreis mit einem, dem jeweiligen Bremskreis zugeordneten, Bremssignalgeber in Wirkverbindung steht. Der Bremssignalgeber ist dazu ausgebildet, Bremssignale zu erzeugen, mit denen der jeweilige Bremskreis angesteuert wird. Außerdem verfügt jeder Bremskreis über mindestens einen Bremsdrucksensor und/oder Bremskraftsensor zur Messung von Bremsdrücken beziehungsweise Bremskräften in dem jeweiligen Bremskreis. Die elektronische Steuereinrichtung steht mit den Bremssignalgebern sowie den Bremsdrucksensoren und/oder Bremskraftsensoren in Wirkverbindung. Dabei ist die Steuereinrichtung dazu ausgebildet, die Bremssignale der Bremssignalgeber sowie die Sensordaten der Bremsdrucksensoren und/oder Bremskraftsensoren auszuwerten und eine variable Bremskraftverteilung zwischen den Bremskreisen zu steuern.

Erfindungsgemäß ist die Steuereinrichtung dazu ausgebildet, einen Ausfall eines der Bremssignalgeber durch einen Abgleich der Bremssignale der Bremssignalgeber und der gemessenen Bremsdrücke und/oder Bremskräfte zu erkennen und eine Fehlermeldung auszugeben.

Eine zweckmäßige Ausgestaltung der Erfindung sieht vor, dass der Bremskreis mit der indirekt betätigten Bremse als hydraulischer Bremskreis mit einem hydraulischen Druckspeicher als Fremdkraftspeicher ausgebildet ist, wobei der diesem Bremskreis zugeordnete Bremssignalgeber einen Bedienhebel oder ein Bedienpedal mit hebelweg- beziehungsweise pedalwegabhängiger Bremssignalerzeugung umfasst, und wobei die Steuereinrichtung mit einem, an den Druckspeicher angeschlossenen, steuerbaren Druckminderventil, insbesondere ein elektrisch angesteuertes Druckminderventil, derart in Wirkverbindung steht, dass eine hebelwegbeziehungsweise pedalwegabhängige Bremsdrucksteuerung ermöglicht wird. Der Bedienhebel kann zum Beispiel einen händisch zu bedienenden Hebelmechanismus, beispielsweise in Form eines Joysticks, aufweisen, so dass Bremsvorgänge mit der Hand der Bedienperson der mobilen Arbeitsmaschine eingeleitet werden können. Als Bedienpedal kann insbesondere ein herkömmliches Bremspedal oder Fahrpedal verwendet werden, so dass die Bremsvorgänge, wie bei Fahrzeugen allgemein üblich, mit dem Fuß durchgeführt werden können.

Dabei kann die Bremsbetätigung der indirekten Bremse auf zwei unterschiedliche Weisen erfolgen:
Eine Variante besteht darin, dass die indirekt betätigte Fremdkraftbremse als positiv betätigte Bremse mit bremskraftauslösender Bremsbetätigung ausgebildet ist. Hierbei wird durch Betätigung des Bedienhebels oder Bedienpedals, insbesondere eines Bremspedals, ein im Fremdkraftspeicher unter Druck stehendes Druckmittel in Abhängigkeit vom Hebelweg beziehungsweise Pedalweg entspannt, so dass an der Bremse ein Bremsdruck proportional zum Hebelweg beziehungsweise Pedalweg aufgebaut wird. Im Falle eines hydraulischen Bremskreises wird das Ventil im Hydraulikkreislauf proportional zum Hebelweg beziehungsweise Pedalweg geöffnet, so dass die Hydraulikflüssigkeit entsprechend dosiert aus dem hydraulischen Druckspeicher abgelassen wird und einen Bremsdruck an der Bremse aufbaut.

In einer anderen Variante ist die indirekt betätigte Fremdkraftbremse als negativ betätigte Bremse mit lösekraftauslösender Bremsbetätigung ausgebildet. Derartige Fremdkraftbremsen sind beispielsweise hydraulisch lösbare Federspeicherbremsen. Dabei wird die Bremsbetätigung lediglich dazu benutzt, den hydraulischen Lösedruck zu verringern, um den von einer Federeinrichtung aufbringbaren Bremsdruck auszulösen. Im Falle eines hydraulischen Bremskreises wird das Ventil im Hydraulikkreislauf bei Betätigung des Bedienhebels oder Bedienpedals, insbesondere des Bremspedals, abhängig vom Hebelweg beziehungsweise Pedalweg geöffnet, so dass der hydraulische Lösedruck abgebaut und der von der Federeinrichtung erzeugte Bremsdruck an der Bremse aufgebaut wird. Diese Form der Bremsbetätigung eignet sich insbesondere für Notbremsungen.

Gemäß einer zweckmäßigen Ausgestaltung der Erfindung ist der Bremskreis mit der direkt betätigten Bremse vorzugsweise als hydraulischer Bremskreis mit einem hydraulischen Bremszylinder ausgebildet, wobei der diesem Bremskreis zugeordnete Bremssignalgeber einen Bedienhebel oder ein Bedienpedal mit hebeldruckbeziehungsweise pedaldruckabhängiger Bremssignalerzeugung umfasst, und wobei der Bremssignalgeber direkt mit dem hydraulischen Bremszylinder in Wirkverbindung steht, so dass eine hebeldruck- beziehungsweise pedaldruckabhängige Bremsdrucksteuerung ermöglicht wird.

Gemäß einer Weiterbildung der Erfindung ist der Bremskreis mit der direkt betätigten Bremse als elektrischer Bremskreis mit einem Generator ausgebildet, wobei der diesem Bremskreis zugeordnete Bremssignalgeber einen Bedienhebel oder ein Bedienpedal mit hebelweg- beziehungsweise pedalwegabhängiger Bremssignalerzeugung umfasst, und wobei der Bremssignalgeber mit dem Generator in Wirkverbindung steht, so dass eine hebelweg- beziehungsweise pedalwegabhängige Bremskraftsteuerung ermöglicht wird. Für den elektrischen Bremskreis kann die generatorische Bremswirkung eines elektrischen Fahrmotors beispielsweise bei einem batterie-elektrisch angetriebenen Fahrzeug genutzt werden.

Dabei kann der Bremssignalgeber zweckmäßigerweise ein Bremspedal oder Fahrpedal umfassen. Bei Verwendung eines Fahrpedals als Bremssignalgeber wird bei nicht getretenem Fahrpedal vorteilhafterweise die generatorische Bremse komplett angesteuert. Hierbei kann die Stellung des Fahrpedals über einen Pedalwegsensor erfasst werden.

In einer besonders bevorzugten Ausgestaltung der Erfindung weist die mobile Arbeitsmaschine mindestens eine elektrisch angetriebene Antriebsachse und mindestens eine nicht angetriebene Achse auf. Dabei sind die direkt betätigte Bremse an der Antriebsachse und die indirekt betätigte Fremdkraftbremse an der nicht angetriebenen Achse angeordnet. Da die indirekt betätigte Fremdkraftbremse höhere Bremsdrücke aufbringen kann, wird sie zweckmäßigerweise an der nicht angetriebenen Achse eingesetzt, an der keine weiteren Bremsleistungen zur Verfügung stehen. Dagegen kann die elektrisch angetriebene Achse zusätzliche generatorische Bremsleistungen durch einen oder mehrere elektrische Fahrmotoren aufbringen. Beispielsweise kann ein elektrischer Fahrmotor beim Bremsen kinetische Energie des Fahrzeugs in elektrische Energie umwandeln. Dabei wirkt der elektrische Fahrmotor als Generator. Aufgrund dieser zusätzlichen Bremsleistung kann die Betriebsbremse an dieser elektrisch angetriebenen Achse schwächer dimensioniert sein. Somit genügt hier die direkt betätigte Bremse.

Bevorzugt umfasst die nicht angetriebene Achse eine Lenkachse. Somit können Antriebseinflüsse in der Lenkung vermieden werden.

Mit Vorteil sind die Antriebsachse als Hinterachse und die nicht angetriebene Achse als Vorderachse der mobilen Arbeitsmaschine ausgebildet. In diesem Fall ist direkt betätigte Bremse an der Hinterachse angeordnet, während sich die indirekt betätigte Fremdkraftbremse, die höhere Bremsdrücke aufbringen kann, an der Vorderachse befindet. Dies ist auch deshalb von Vorteil, weil bei einem Fahrzeug generell die erforderlichen Bremskräfte an der Vorderachse höher sind als an der Hinterachse.

Eine Weiterbildung der Erfindung sieht vor, dass der Bremskreis mit der indirekt betätigten Fremdkraftbremse mindestens eine Bremsassistenzeinrichtung aufweist. Bremsassistenzeinrichtungen lassen sich ganz besonders elegant in solche Bremskreise integrieren.

Insbesondere bei Ausbildung des indirekt betätigten Bremskreises als hydraulischer Bremskreis kann die Bremsassistenzeinrichtung technisch einfach integriert werden. Dabei umfasst die Bremsassistenzeinrichtung vorzugsweise ein elektrisch betätigtes Ventil, welches in den hydraulischen Bremskreis eingeschaltet ist. Das elektrisch betätigte Ventil ist zweckmäßigerweise zwischen dem hydraulischen Druckspeicher und der Bremse, beispielsweise einer Trommel-, Scheiben- oder Lamellenbremse, parallel zu dem von der elektronischen Steuereinrichtung angesteuerten Druckminderventil angeordnet. Auf diese Weise kann das elektrisch betätigte Ventil unabhängig von der Bremspedalbetätigung einen Bremsvorgang auslösen. Das elektrisch betätigte Ventil steht dabei mit einer Steuerungseinrichtung eines Bremsassistenzsystems in Wirkverbindung. Die Steuerungseinrichtung kann so beispielsweise in erkannten Gefahrensituationen eine Notbremsung auslösen.

Ergänzt werden kann die erfindungsgemäße Bremseinrichtung noch durch Drehzahlsensoren, insbesondere in einer Vorderachse des Fahrzeugs. Bei blockierenden Rädern kann dann der eingesteuerte Druck wieder reduziert werden, indem an der indirekt betätigten Fremdkraftbremse das elektrisch angesteuerte Druckminderventil entsprechend angesteuert wird.

Die Erfindung eignet sich für alle Arten von mobilen Arbeitsmaschinen, insbesondere für Flurförderzeuge, mobile Land- und Forstgeräte sowie mobile Baumaschinen. In einer besonders bevorzugten Ausgestaltung ist die mobile Arbeitsmaschine als Schlepper oder Plattformfahrzeug ausgebildet.

Mit der Erfindung ist eine Reihe von Vorteilen verbunden:
Die Erfindung ermöglicht eine variable Bremskraftverteilung zwischen den einzelnen Bremskreisen der Zweikreisbremseinrichtung und somit eine Anpassung an unterschiedliche Fahrzeuggewichte und Gewichtsverteilungen. Außerdem ist eine Ausfallerkennung beider Bremskreise bei Auftreten eines Fehlers in einem Bremskreis möglich. Auch das Vorhandensein von Luft in einer Bremsleitung des direkt betätigten Bremskreises kann über einen Abgleich zwischen dem Pedalweg des Bremspedals und dem Druck in der Bremsleitung ausgeschlossen werden. Dadurch, dass die Bremskreise aus unterschiedlichen Signalquellen, also zum Beispiel über den Pedalweg und den Pedaldruck des Bremspedals, angesteuert werden, wird die Betriebssicherheit wesentlich erhöht. Durch den Einbau von Assistenzsystemen ergeben sich weitere Sicherheitsvorteile. Beispielsweise kann der Bremsdruck an der Vorderachse mittels des elektrisch angesteuerten indirekten Bremskreises langsamer aufgebaut werden als die Pedalbewegung des Bremspedals erfolgt, damit das Fahrzeug nicht überbremst wird. Außerdem kann durch eine Reduzierung der Bremsdrücke an der Vorderachse ein Antiblockiersystem simuliert werden.

Weitere Vorteile und Einzelheiten der Erfindung werden anhand der in den schematischen Figuren dargestellten Ausführungsbeispiele näher erläutert. Hierbei zeigen
- Figur 1: eine erfindungsgemäße Bremseinrichtung mit einem Zweikreisbremssystem mit indirekt betätigter hydraulischer Fremdkraftbremse und direkt betätigter hydraulischer Bremse und
- Figur 2: eine erfindungsgemäße Bremseinrichtung mit einem Zweikreisbremssystem mit indirekt betätigter hydraulischer Fremdkraftbremse und direkt betätigter elektrischer Generatorbremse.

In den beiden Figuren sind die jeweils gleichen Merkmale mit denselben Bezugsziffern bezeichnet.

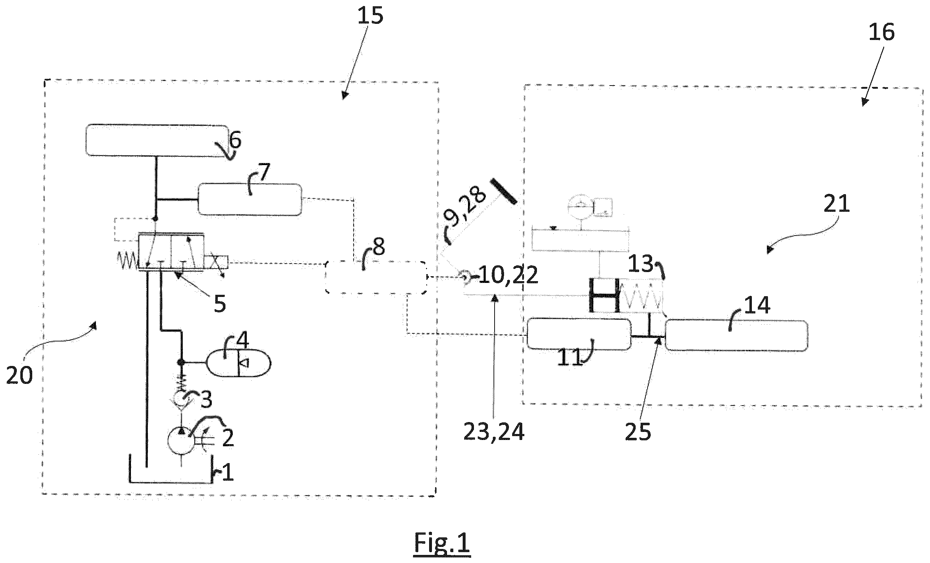

In der Figur 1 ist eine erfindungsgemäße Bremseinrichtung mit zwei Bremskreisen 15 und 16 dargestellt. Der erste Bremskreis 15 verfügt über eine indirekt betätigte, elektrisch angesteuerte, hydraulische Fremdkraftbremse 20, während der zweite Bremskreis 16 über eine, als hydraulisch betätigte Bremse ausgebildete, direkt betätigte Bremse 21 verfügt. Die Fremdkraftbremse 20 und die direkt betätigte Bremse 21 der beiden Bremskreise 15 und 16 werden durch ein gemeinsames, als Bremspedal 9 ausgebildetes, Bedienpedal 28 betätigt. In das Bremspedal 9 ist als pedalwegabhängiger Bremssignalgeber 22 des Bremskreises 15 ein Pedalwegsensor 10 eingebaut. Durch Drücken des Bremspedals 9 wird außerdem ein Pedaldruck in einer Pedaldruckleitung 23 aufgebaut, die als pedaldruckabhängiger Bremssignalgeber 24 des Bremskreises 16 dient.

Wesentlich ist dabei die Kombination des pedaldruckabhängigen, direkt betätigten, hydraulischen Bremskreises 16 mit dem pedalwegabhängigen, elektrisch angesteuerten, indirekt betätigten hydraulischen Bremskreis 15.

Der als Pedalwegsensor 10 ausgebildete pedalwegabhängige Bremssignalgeber 22 des Bremskreises 15 steht mit einer elektronischen Steuereinrichtung 8 in Verbindung, die ein elektrisch angesteuertes Druckminderventil 5 des Bremskreises 5 ansteuert.

Für den Druckaufbau in dem elektrisch angesteuerten Bremskreis 15 dient ein Druckspeicher 4 als Energiequelle. Gespeist wird der Druckspeicher 4 aus einer hydraulischen Pumpe 2, die Druckmittel aus einem Behälter 1 ansaugt. Ein Rückschlagventil 3 verhindert einen ungewollten Druckabbau aus dem Druckspeicher 4.

Die Signalübertragung vom Pedalwegsensor 10 des Bremspedals 9 über das elektronische Steuereinrichtung 8 zu dem elektrisch angesteuerten Druckminderventil 5 des Bremskreises 15 ermöglicht eine situationsabhängige Steuerung des Bremsdruckes an einer Bremse 6 des Bremskreises 15, beispielsweise einer mechanischen Lamellenbremse oder Scheibenbremse 6.

Der zweite Bremskreis 16 wird direkt über einen an das Bremspedal 9 mittels der Pedaldruckleitung 23 und somit des pedaldruckabhängigen Bremssignalgebers 24 gekoppelten hydraulischen Bremszylinder 13 versorgt. Von dem Bremszylinder 13 wird dann aus dem Pedaldruck des Bremspedals 9 über eine Bremsleitung 25 Druck an einer Bremse 14 des Bremskreises 16 erzeugt, beispielswiese einer mechanischen Lamellenbremse oder Scheibenbremse 14.

Die Kopplung der Bremskreise 15 und 16 erfolgt über die elektronische Steuereinrichtung 8, einen mit der Steuereinrichtung 8 verbundenen Bremsdrucksensor 11, der den Druck des zweiten Bremskreises 16 erfasst, und den mit der Steuereinrichtung 8 verbundenen Pedalwegsensor 10 des ersten Bremskreises 15 an dem Bremspedal 9. Wird Bremsdruck an dem Bremsdrucksensor 11 des Bremskreises 16 ohne Pedalweg am Bremspedal 9 erfasst, dann liegt ein Defekt am Pedalwegsensor 10 oder am Bremsdrucksensor 11 vor.

Um den Druckaufbau innerhalb des ersten Bremskreises 15 zu ermitteln, wird auch hier ein Bremsdrucksensor 7 eingesetzt, der mit der Steuereinrichtung 8 verbunden ist.

Abhängig vom Fahrzeuggewicht kann der Druckaufbau im ersten Bremskreis 15 variabel zum Druckaufbau im zweiten Bremskreis 16 gestaltet werden. Die erfindungsgemäße Bremseinrichtung kann somit in Fahrzeugen unterschiedlicher Fahrzeuggewichte ohne bauliche und konstruktive Veränderungen eingesetzt werden.

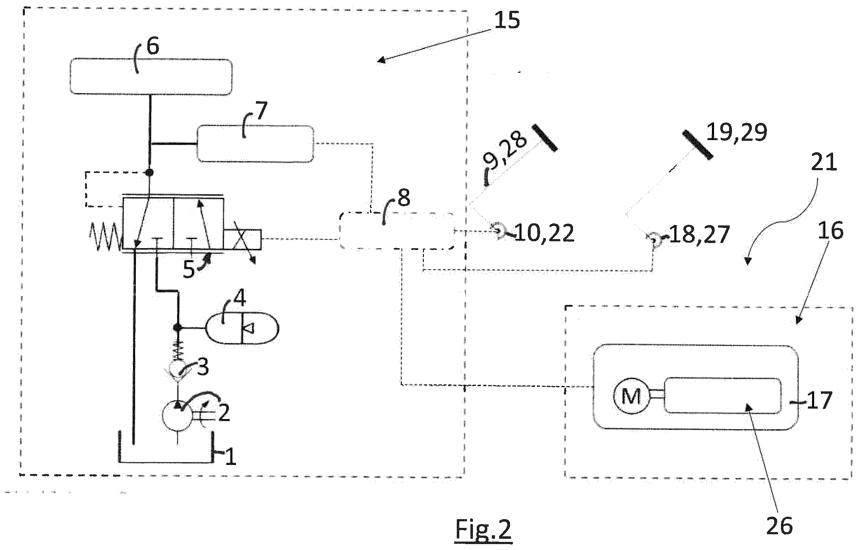

Die Figur 2 zeigt eine Variante einer erfindungsgemäßen Bremseinrichtung mit den zwei Bremskreisen 15 und 16. Der Bremskreis 15 entspricht der Darstellung der Figur 1. Der Bremskreis 16 verfügt bei der Variante der Figur 2 über eine direkt betätigte elektrische Generatorbremse 17, die von der Steuereinrichtung 8 angesteuert ist. Mittels eines, mit einer Radwelle 26 des Fahrzeugs verbundenen Generators M, der auch als elektrischer Fahrmotor des Fahrzeugs dient, kann das Fahrzeug generatorisch abgebremst werden.

Der Generator M erhält das Bremssignal vom Pedalwegsensor 10 am Bremspedal 9.

Eine weitere Möglichkeit besteht in einer Auswertung eines, als Fahrpedal 19 ausgebildeten, Bedienpedals 29 des Fahrzeugs als Bremssignalgeber 27 des Bremskreises 16. Bei nicht getretenem Fahrpedal 19 wird die Generatorbremse 17 komplett angesteuert. Erfasst wird dabei die Stellung des Fahrpedals 19 über einen Pedalwegsensor 18, der mit der Steuereinrichtung 8 verbunden ist.

## Patentansprüche

1. Bremseinrichtung für eine mobile Arbeitsmaschine mit mindestens zwei Bremskreisen (15, 16) einer Betriebsbremse, wobei der eine Bremskreis (16) eine direkt betätigte Bremse (21) und der andere Bremskreis (15) eine indirekt betätigte Fremdkraftbremse (20) umfasst, wobei die Bremskreise (15, 16) über eine gemeinsame elektronische Steuereinrichtung (8) gekoppelt sind, wobei jeder Bremskreis (15, 16) mit einem, dem jeweiligen Bremskreis (15, 16) zugeordneten, Bremssignalgeber (22, 24) in Wirkverbindung steht, der dazu ausgebildet ist, Bremssignale zu erzeugen, mit denen der jeweilige Bremskreis (15, 16) angesteuert wird, und jeder Bremskreis (15, 16) über mindestens einen Bremsdrucksensor (7, 11) und/oder Bremskraftsensor zur Messung von Bremsdrücken beziehungsweise Bremskräften in dem jeweiligen Bremskreis (15, 16) verfügt, wobei die elektronische Steuereinrichtung (8) mit den Bremssignalgebern (22, 24) sowie den Bremsdrucksensoren (7, 11) und/oder Bremskraftsensoren in Wirkverbindung steht und dazu ausgebildet ist, die Bremssignale der Bremssignalgeber (22, 24) sowie die Sensordaten der Bremsdrucksensoren (7, 11) und/oder Bremskraftsensoren auszuwerten und eine variable Bremskraftverteilung zwischen den Bremskreisen (15, 16) zu steuern, **dadurch gekennzeichnet, dass** die Steuereinrichtung (8) dazu ausgebildet ist, einen Ausfall eines der Bremssignalgeber (22, 24) durch einen Abgleich der Bremssignale der Bremssignalgeber (22, 24) und der gemessenen Bremsdrücke und/oder Bremskräfte zu erkennen und eine Fehlermeldung auszugeben.

2. Bremseinrichtung nach Anspruch 1, **dadurch gekennzeichnet, dass** der Bremskreis (15) mit der indirekt betätigten Fremdkraftbremse (20) als hydraulischer Bremskreis (15) mit einem hydraulischen Druckspeicher (4) als Fremdkraftspeicher ausgebildet ist, wobei der diesem Bremskreis (15) zugeordnete Bremssignalgeber (22) einen Bedienhebel oder ein Bedienpedal (28) mit hebelweg- beziehungsweise pedalwegabhängiger Bremssignalerzeugung umfasst, und wobei die Steuereinrichtung (8) mit einem, an den Druckspeicher (4) angeschlossenen, steuerbaren Druckminderventil (5), insbesondere eines elektrisch angesteuerten Druckminderventils (5), derart in Wirkverbindung steht, dass eine hebelweg- beziehungsweise pedalwegabhängige Bremsdrucksteuerung ermöglicht wird.

3. Bremseinrichtung nach einem der Ansprüche 1 oder 2, **dadurch gekennzeichnet, dass** der Bremskreis (16) mit der direkt betätigten Bremse (21) als hydraulischer Bremskreis (16) mit einem hydraulischen Bremszylinder (13) ausgebildet ist, wobei der diesem Bremskreis (16) zugeordnete Bremssignalgeber (24) einen Bedienhebel oder ein Bedienpedal (28, 29) mit hebeldruck- beziehungsweise pedaldruckabhängiger Bremssignalerzeugung umfasst, und wobei der Bremssignalgeber (24) direkt mit dem hydraulischen Bremszylinder (13) in Wirkverbindung steht, so dass eine hebeldruck- beziehungsweise pedaldruckabhängige Bremsdrucksteuerung ermöglicht wird.

4. Bremseinrichtung nach einem der Ansprüche 1 bis 3, **dadurch gekennzeichnet, dass** der Bremskreis (16) mit der direkt betätigten Bremse (21) als elektrischer Bremskreis (16) mit einem Generator (M) ausgebildet ist, wobei der diesem Bremskreis (16) zugeordnete Bremssignalgeber (22, 27) einen Bedienhebel oder ein Bedienpedal (28, 29) mit hebelweg- beziehungsweise pedalwegabhängiger Bremssignalerzeugung umfasst, und wobei der Bremssignalgeber (22, 27) mit dem Generator (M) in Wirkverbindung steht, so dass eine hebelwegbeziehungsweise pedalwegabhängige Bremskraftsteuerung ermöglicht wird.

5. Bremseinrichtung nach einem der Ansprüche 1 bis 4, **dadurch gekennzeichnet, dass** der Bremssignalgeber (22, 24, 27) ein Bremspedal (9) oder Fahrpedal (19) umfasst.

6. Bremseinrichtung nach einem der Ansprüche 1 bis 5, **dadurch gekennzeichnet, dass** der Bremskreis (15) mit der indirekt betätigten Fremdkraftbremse (20) mindestens eine Bremsassistenzeinrichtung aufweist.

7. Bremseinrichtung nach Anspruch 6, **dadurch gekennzeichnet, dass** bei Ausbildung des Bremskreises (15) als hydraulischer Bremskreis (15) die Bremsassistenzeinrichtung ein elektrisch betätigtes Ventil im hydraulischen Bremskreis (15) umfasst.

8. Mobile Arbeitsmaschine mit einer Bremseinrichtung nach einem der Ansprüche 1 bis 7, **dadurch gekennzeichnet, dass** die mobile Arbeitsmaschine als Schlepper oder Plattformfahrzeug ausgebildet ist.

## Claims

1. Braking device for a mobile working machine having at least two brake circuits (15, 16) of a service brake, wherein one brake circuit (16) comprises a directly actuated brake (21) and the other brake circuit (15) comprises an indirectly actuated power-assisted brake (20), wherein the brake circuits (15, 16) are coupled via a common electronic control device (8), wherein each brake circuit (15, 16) is operatively connected to a brake signal transmitter (22, 24) assigned to the respective brake circuit (15, 16), which brake signal transmitter is configured to generate brake signals with which the respective brake circuit (15, 16) is controlled, and each brake circuit (15, 16) possesses at least one brake pressure sensor (7, 11) and/or brake force sensor for measuring brake pressures or brake forces in the respective brake circuit (15, 16), wherein the electronic control device (8) is operatively connected to the brake signal transmitters (22, 24) as well as to the brake pressure sensors (7, 11) and/or brake force sensors and is configured to evaluate the brake signals of the brake signal transmitters (22, 24) as well as the sensor data of the brake pressure sensors (7, 11) and/or brake force sensors and to control a variable brake force distribution between the brake circuits (15, 16), **characterized in that** the control device (8) is configured to detect failure of one of the brake signal transmitters (22, 24) by comparing the brake signals of the brake signal transmitters (22, 24) with the measured brake pressures and/or brake forces and to output an error message.

2. Braking device according to Claim 1, **characterized in that** the brake circuit (15) having the indirectly actuated power-assisted brake (20) is configured as a hydraulic brake circuit (15) having a hydraulic pressure accumulator (4) as a power-assisted accumulator, wherein the brake signal transmitter (22) assigned to this brake circuit (15) comprises an operating lever or an operating pedal (28) with lever-travel- or pedal-travel-dependent brake signal generation, and wherein the control device (8) is operatively connected to a controllable pressure reducing valve (5), in particular an electrically controlled pressure reducing valve (5), connected to the pressure accumulator (4), in such a way that lever-travel- or pedal-travel-dependent brake pressure control is made possible.

3. Braking device according to either one of Claims 1 and 2, **characterized in that** the brake circuit (16) having the directly actuated brake (21) is configured as a hydraulic brake circuit (16) having a hydraulic brake cylinder (13), wherein the brake signal transmitter (24) assigned to this brake circuit (16) comprises an operating lever or an operating pedal (28, 29) with lever-pressure- or pedal-pressure-dependent brake signal generation, and wherein the brake signal transmitter (24) is directly operatively connected to the hydraulic brake cylinder (13) such that lever-pressure- or pedal-pressure-dependent brake pressure control is made possible.

4. Braking device according to one of Claims 1 to 3, **characterized in that** the brake circuit (16) having the directly actuated brake (21) is configured as an electrical brake circuit (16) having a generator (M), wherein the brake signal transmitter (22, 27) assigned to this brake circuit (16) comprises an operating lever or an operating pedal (28, 29) with lever-travel- or pedal-travel-dependent brake signal generation, and wherein the brake signal transmitter (22, 27) is operatively connected to the generator (M) such that lever-travel- or pedal-travel-dependent brake force control is made possible.

5. Braking device according to one of Claims 1 to 4, **characterized in that** the brake signal transmitter (22, 24, 27) comprises a brake pedal (9) or accelerator pedal (19).

6. Braking device according to one of Claims 1 to 5, **characterized in that** the brake circuit (15) having the indirectly actuated power-assisted brake (20) has at least one brake assistance device.

7. Braking device according to Claim 6, **characterized in that**, in the case where the brake circuit (15) is configured as a hydraulic brake circuit (15), the brake assistance device comprises an electrically actuated valve in the hydraulic brake circuit (15).

8. Mobile working machine having a braking device according to one of Claims 1 to 7, **characterized in that** the mobile working machine is configured as a tractor or platform vehicle.

## Revendications

1. Dispositif de freinage pour une machine de travail mobile ayant au moins deux circuits de freinage (15, 16) d'un frein de service, le premier circuit de freinage (16) comprenant un frein à actionnement direct (21) et l'autre circuit de freinage (15) comprenant un frein à force auxiliaire à actionnement indirect (20), les circuits de freinage (15, 16) étant couplés par l'intermédiaire d'un dispositif de commande électronique commun (8), chaque circuit de freinage (15, 16) étant en interconnexion fonctionnelle avec un générateur de signal de freinage (22, 24) associé au circuit de freinage respectif (15, 16), lequel est conçu pour générer des signaux de freinage au moyen desquels le circuit de freinage (15, 16) respectif est commandé, et chaque circuit de freinage (15, 16) disposant d'au moins un capteur de pression de freinage (7, 11) et/ou d'un capteur de force de freinage pour la mesure des pressions de freinage et le cas échéant, des forces de freinage dans le circuit de freinage respectif (15, 16), le dispositif de commande électronique (8) étant en interconnexion fonctionnelle avec les générateurs de signal de freinage (22, 24) ainsi qu'avec les capteurs de pression de freinage (7, 11) et/ou les capteurs de force de freinage et étant conçu pour évaluer les signaux de freinage des générateurs de signal de freinage (22, 24) ainsi que les données de capteur des capteurs de pression de freinage (7, 11) et/ou des capteurs de force de freinage et pour commander une distribution variable de la force de freinage entre les circuits de freinage (15, 16), **caractérisé en ce que** le dispositif de commande (8) est conçu pour détecter une défaillance de l'un des générateurs de signal de freinage (22, 24) par une comparaison des signaux de freinage des générateurs de signal de freinage (22, 24) et des pressions de freinage et/ou forces de freinage mesurées et pour délivrer un message d'erreur.

2. Dispositif de freinage selon la revendication 1, **caractérisé en ce que** le circuit de freinage (15) comprenant le frein à force auxiliaire à actionnement indirect (20) est conçu sous forme de circuit de freinage hydraulique (15) comportant un accumulateur de pression hydraulique (4) en tant qu'accumulateur de force auxiliaire, le générateur de signal de freinage (22) associé à ce circuit de freinage (15) comprenant un levier de commande ou une pédale de commande (28) avec génération de signal de freinage dépendant de la course du levier, respectivement de la course de la pédale, et le dispositif de commande (8) étant en interconnexion fonctionnelle avec une soupape de réduction de pression (5) commandable, en particulier une soupape de réduction de pression (5) commandée électriquement, raccordée à l'accumulateur de pression (4), de manière à permettre une commande de la pression de freinage dépendant de la course du levier, respectivement de la course de la pédale.

3. Dispositif de freinage selon l'une des revendications 1 ou 2, **caractérisé en ce que** le circuit de freinage (16) comprenant le frein à actionnement direct (21) est conçu sous forme de circuit de freinage hydraulique (16) comportant un cylindre de frein hydraulique (13), le générateur de signal de freinage (24) associé à ce circuit de freinage (16) comprenant un levier de commande ou une pédale de commande (28, 29) avec génération de signal de freinage dépendant de la pression du levier, respectivement de la pression de la pédale, et le générateur de signal de freinage (24) étant en interconnexion fonctionnelle directe avec le cylindre de frein hydraulique (13), de manière à permettre une commande de la pression de freinage dépendant de la pression du levier, respectivement de la pression de la pédale.

4. Dispositif de freinage selon l'une des revendications 1 à 3, **caractérisé en ce que** le circuit de freinage (16) comprenant le frein à actionnement direct (21) est conçu sous forme de circuit de freinage électrique (16) comportant un générateur (M), le générateur de signal de freinage (22, 27) associé à ce circuit de freinage (16) comprenant un levier de commande ou une pédale de commande (28, 29) avec génération de signal de freinage dépendant de la course du levier, respectivement de la course de la pédale, et le générateur de signal de freinage (22, 27) étant en interconnexion fonctionnelle avec le générateur (M), de manière à permettre une commande de la force de freinage dépendant de la course du levier, respectivement de la course de la pédale.

5. Dispositif de freinage selon l'une des revendications 1 à 4, **caractérisé en ce que** le générateur de signal de freinage (22, 24, 27) comprend une pédale de frein (9) ou une pédale d'accélérateur (19).

6. Dispositif de freinage selon l'une des revendications 1 à 5, **caractérisé en ce que** le circuit de freinage (15) comprenant le frein à force auxiliaire à actionnement indirect (20) comporte au moins un dispositif d'assistance au freinage.

7. Dispositif de freinage selon la revendication 6, **caractérisé en ce que**, lorsque le circuit de freinage (15) est conçu sous forme de circuit de freinage hydraulique (15), le dispositif d'assistance au freinage comprend une soupape à actionnement électrique dans le circuit de freinage hydraulique (15).

8. Machine de travail mobile ayant un dispositif de freinage selon l'une des revendications 1 à 7, **caractérisée en ce que** la machine de travail mobile est conçue sous forme de tracteur ou de véhicule à plateforme.
